# EUROPÄISCHE PATENTSCHRIFT

(11) **EP 3 173 556 B1**
(45) Veröffentlichungstag und Bekanntmachung des Hinweises auf die Patenterteilung: **26.12.2018**
(21) Anmeldenummer: 16197644.4
(22) Anmeldetag: 08.11.2016
(51) Int. Cl.: E05D 5/02, F16B 13/08

(54) **MONTAGEELEMENT ZUR BEFESTIGUNG VON TÜRBÄNDERN**
MOUNTING ELEMENT FOR ATTACHING DOOR HINGES
ÉLÉMENT DE MONTAGE DESTINÉ À FIXER DES PENTURES DE PORTE

(30) Priorität: 26.11.2015 DE 102015120559
(43) Veröffentlichungstag der Anmeldung: 31.05.2017
(73) Patentinhaber: Simonswerk GmbH, D-33378 Rheda-Wiedenbrück (DE)
(72) Erfinder: DREISEWERD, Nikolaus, 33397 Rietberg (DE)
(74) Vertreter: Lorenz, Bernd Ingo Thaddeus

(56) Entgegenhaltungen:
- EP-A1- 2 505 751
- DE-U1-202005 011 168

## Beschreibung

Die Erfindung betrifft ein Montageelement zur Befestigung von Türbändern.

Türbänder dienen zur schwenkbeweglichen Verbindung eines Türflügels mit einer Türzarge. Diese weisen üblicherweise einen türblattseitigen Aufnahmekörper und einen zargenseitigen Aufnahmekörper auf, welche durch eine Scharnieranordnung miteinander schwenkbeweglich verbunden sind. Die beiden Aufnahmekörper müssen mit dem Türblatt bzw. mit der Türzarge verbunden werden. Hierzu ist es üblich, die Aufnahmekörper mittels Schrauben an dem Türkörper bzw. an der Türzarge zu befestigen.

Gerade bei zum Tür- und Zargenbau häufig verwendeten Hohlprofilen ergibt sich jedoch der Nachteil, dass mit herkömmlichen Schrauben der gesamte Kraftschluss über kleine Anlageflächen zwischen einer Schraube und der Wandung eines Hohlprofils erfolgen muss. eine solche punktuelle Belastung kann zu Materialversagen führen, so dass das Türband nicht sicher gehalten werden kann.

Aus EP 2 505 751 A1 ist ein Montageelement zur Befestigung von Türbändern an Hohlprofilen bekannt, welches aus einer innerhalb des Hohlprofils anzuordnenden Befestigungsplatte und einer damit wechselwirkenden Befestigungsschraube besteht.

Vor diesem Hintergrund liegt der Erfindung die Aufgabe zugrunde, die Befestigung eines Türbandes, insbesondere an Hohlprofilen, derart zu verbessern, dass das Türband besonders einfach montiert und auch wieder demontiert werden kann. Gleichzeitig soll die Krafteinleitung und -verteilung durch das Montageelement optimiert werden. Das erfindungsgemäße Montageelement ist jedoch auch bei massiven Wänden einsetzbar.

Gegenstand der Erfindung und Lösung dieser Aufgabe ist ein Montageelement nach Anspruch 1.

Das Montageelement weist erfindungsgemäß ein Kopfstück und ein entlang einer Achse linear gegenüber dem Kopfstück verschiebbares Fußstück auf. Kopfstück und Fußstück sind durch einen Spindeltrieb zur Einstellung des Abstandes in Richtung der Achse miteinander verbunden. Zwischen dem Kopfstück und dem Fußstück sind zumindest zwei entlang schiefer Ebenen jeweils gegenüber dem Kopfstück und dem Fußstück verschiebbar ausgebildete Zwischenstücke angeordnet. Die Zwischenstücke hintergreifen sich mit dem Kopfstück und dem Fußstück jeweils an den schiefen Ebenen. Hierdurch können die Zwischenstücke sowohl senkrecht zur Achse ausgestellt, aber auch wieder zurückgezogen werden. Durch die Ausstellbewegung kann eine Befestigung des Türbandes auf mehrere Arten herbeigeführt werden. Einerseits können die Zwischenstücke durch die radiale Bewegung gegen Innenflächen einer Öffnung bzw. Bohrung innerhalb der Zarge oder des Türflügels verspannt werden. Hierdurch wird eine kraftschlüssige Verbindung mit dem das Montageelement umgebenden Material hergestellt. Dabei ist auch eine Verformung des Materials möglich, so dass sich zusätzlich ein Formschluss einstellt. Alternativ oder zusätzlich können die Zwischenstücke auch durch die Verschiebebewegung entlang der schiefen Ebenen in Richtung der Achse mit einer Innenfläche der Türzarge bzw. des Türflügels in Eingriff gebracht werden. Beispielsweise können die Zwischenstücke bei einem Hohlkammerprofil so verschoben werden, dass sie mit der Innenseite einer Außenwand in Kontakt kommen. Dabei kann das Wandmaterial auch verformt werden. Nichtsdestotrotz kann das erfindungsgemäße Montageelement in allen Anwendungsfällen wieder vollständig entfernt werden, da sich die Zwischenstücke aufgrund der in Zug- und Druckrichtung wirksamen Schrägführung wieder vollständig in eine Ausgangsposition zurück bewegen lassen, in der die Zwischenstücke über die Außenkontur des Montageelementes in Einsatzrichtung nicht hinausstehen.

In einer besonders bevorzugten Ausgestaltung weist das Montageelement drei Zwischenstücke auf, die gegeneinander um jeweils 120° in Umfangsrichtung versetzt angeordnet sind. Hierdurch kann eine besonders zuverlässige umlaufende Abstützung - sei es durch Kraftschluss oder Formschluss - hergestellt werden.

Zweckmäßigerweise ist der Spindeltrieb durch eine Schraube gebildet, die mit ihrem Kopf verschiebesicher im oder an dem Kopfstück gelagert ist. Die Schraube greift mit einem Gewinde in ein Innengewinde an dem Fußstück ein. Hierdurch wird verhindert, dass bei einer Schubbelastung des Spindeltriebs der Schraubenkopf hervortritt, ohne eine Bewegung der Zwischenstücke auszulösen. Durch die Verschiebesicherung kann der Spindeltrieb ohne zusätzlichen Aufwand in beide Richtungen sicher benutzt werden. Alternativ kann vorgesehen sein, Kopfstück und Fußstück durch eine Feder auseinanderzudrücken.

In einer besonders bevorzugten Ausgestaltung ist das Kopfstück an einem zu befestigendem Objekt - insbesondere einem Türband - einstückig angeformt. Dies kann einerseits durch dauerhafte Verbindung - beispielsweise durch Schweißen oder Kleben - eines vorgeformten Kopfstückes mit einem bestehenden Türband geschehen. Alternativ kann auch ein Abschnitt des Türbandes strukturell als Kopfstück mit schiefen Ebenen zum wechselseitigen Hintergreifen mit den Zwischenstücken ausgebildet sein.

In einer alternativen Ausgestaltung weist das Kopfstück zumindest abschnittsweise ein Übermaß gegenüber dem Fußstück und den Zwischenstücken senkrecht zu der Achse auf. Dadurch kann das Montageelement eine zugeordnete Öffnung an dem zu montierenden Objekt, insbesondere Türband, durchgreifen wobei das Kopfstück mit dem Übermaß an einen die Öffnung umgebenden Randbereich abgestützt ist. Die beim Aktivieren des Montageelementes auftretende Zugbeanspruchung sorgt für eine sichere Fixierung des zu montierenden Objektes zwischen dem Vorsprung des Kopfstückes und der Türzarge bzw. dem Türblatt.

Die Erfindung wird anhand der nachfolgenden, lediglich Ausführungsbeispiele darstellenden Zeichnungen beispielhaft erläutert. Es zeigen schematisch:
- Fig.1: Eine perspektivische Explosionsdarstellung eines erfindungsgemäßen Montageelementes,
- Fig. 2A: einen Längsschnitt durch ein erfindungsgemäßes Montageelement gemäß einer ersten Ausführungsform vor dem Verspannen des Montageelementes,
- Fig. 2B: die Ansicht aus Fig. 2A nach dem Verspannen des Montageelementes,
- Fig. 3A: einen Längsschnitt durch ein erfindungsgemäßes Montageelement gemäß einer zweiten Ausführungsform vor dem Verspannen und
- Fig. 3B: die Ansicht aus Fig. 3A nach dem Verspannen des Montageelementes.

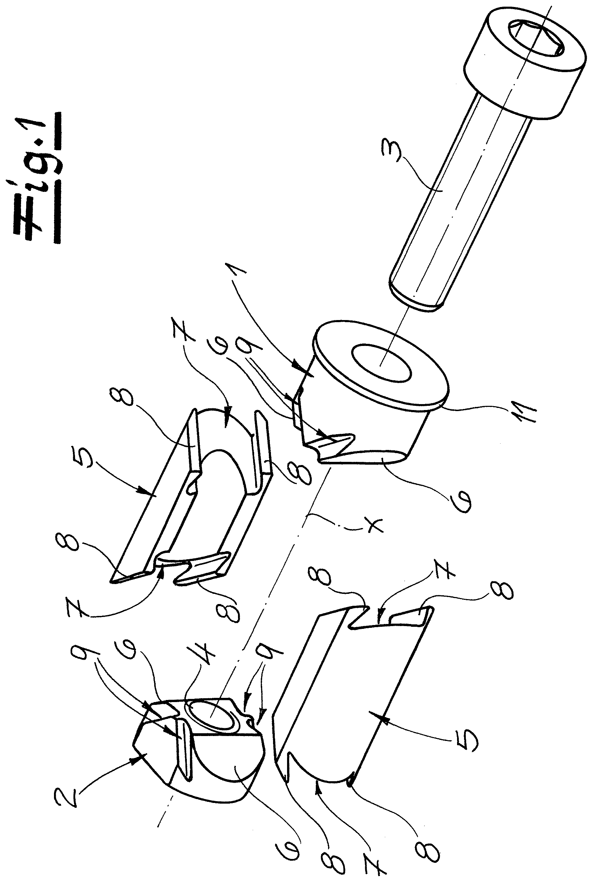

In der Fig. 1 ist eine Ausführungsform des erfindungsgemäßen Montageelementes in Explosionsdarstellung gezeigt. Dieses umfasst ein Kopfstück 1 und ein entlang einer Achse x gegenüber dem Kopfstück 1 verschiebbares Fußstück 2. Das Kopfstück 1 und das Fußstück 2 sind mittels eines durch eine Schraube 3 gebildeten Spindeltriebes im Einbauzustand entlang der Achse x gegeneinander linear verschiebbar. Dazu ist die Schraube 3 an dem Kopfstück 1 durch nicht dargestellte Mittel verschiebesicher gehalten und greift an dem Fußstück 2 in ein Innengewinde 4 ein.

Zwischen dem Kopfstück 1 und dem Fußstück 2 sind zwei gegenüberliegende Zwischenstücke 5 angeordnet, die an dem Kopfstück 1 durch spiegelsymmetrische gegenüberliegende Schrägführungen, welche durch Keilflächen 6 und zugeordnete Gegenflächen 7 gebildet sind, verschiebbar gehalten. Die Zwischenstücke 5 und das Kopfstück 1 hintergreifen sich an den Schrägführungen jeweils mittels Vorsprüngen 8 der Zwischenstücke 5, die die Keilflächen 6 hintergreifen und mit zugeordneten Nuten 9 am Kopfstück in Eingriff stehen. Die doppelte hintergreifende Schrägführung zwischen dem Fußstück 2 und den Zwischenstücken 5 ist analog ebenfalls mit Keilflächen 6, Gegenflächen 7 und in Nuten 9 eingreifenden Vorsprüngen 8 gebildet.

Das Montageelement weist eine nicht um die Achse x rotationssymmetrische Außenkontur zur Bildung einer Verdrehsicherung auf. Dazu sind zwei abgeflachte Abschnitte vorgesehen. Das Montageelement kann dann in entsprechend ausgeformte Öffnungen eines Türbandes und/oder in eine Öffnung oder Bohrung eines Tür- oder Zargenabschnittes zur Befestigung des Türbandes eingesetzt werden.

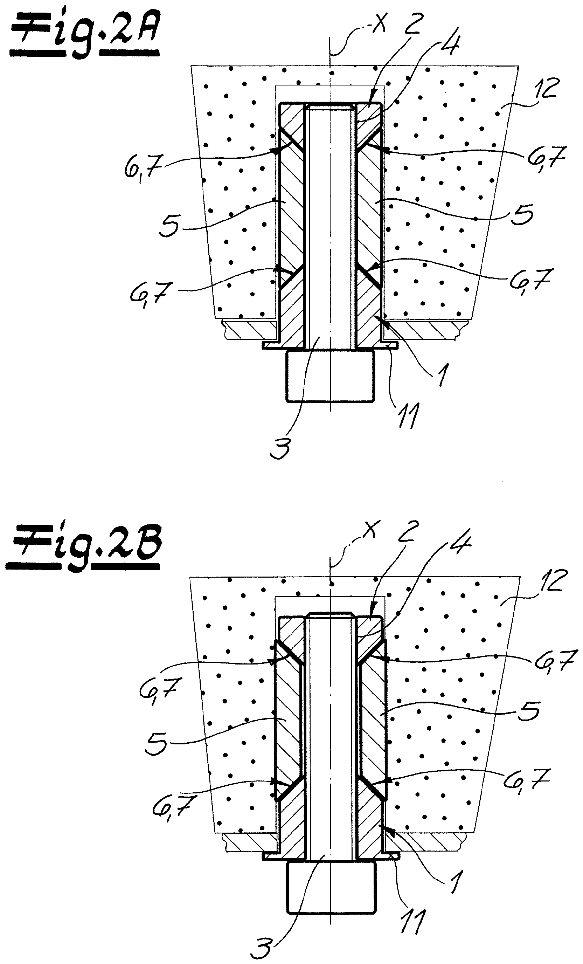

In den Fig. 2A und 2B ist die Einbausituation eines erfindungsgemäßen Montageelementes gemäß einer ersten Ausführungsform dargestellt. Das Montageelement durchgreift dabei eine Öffnung eines flachen Abschnittes eines Türbandes 10. Dabei weist das Kopfstück 1 an seinem dem Schraubenkopf zugewandtem Ende einen Kragen 11 auf, der gegenüber der Öffnung des Türbandes 10 ein Übermaß aufweist und dieses dadurch in Richtung der Achse x abstützen kann. Der die Öffnung des Türbandes 10 durchgreifende Abschnitt des Montageelementes ist in eine Bohrung einer massiven Wand 12 eingesetzt.

Einer vergleichenden Betrachtung der Fig. 2A und 2B entnimmt man, dass durch die Betätigung des Spindeltriebes das Kopfstück 1 und das Fußstück 2 aufeinander zubewegt werden, so dass die Zwischenstücke 5 in quer zur Achse x ausgestellt werden. Hierdurch werden die Außenflächen der Zwischenstücke 5 mit der Wandung der Bohrung in der Wand 12 in Anlage gebracht und gegenüber diesen verspannt. Die Zwischenstücke 5 sind in der Fig. 2B unter leichter Verformung der Wand 12 in die Wandung der Bohrung eingedrückt. Durch die Schrägführung der Zwischenstücke 5 wird überdies eine Zugbeanspruchung hervorgerufen, welche das Türband 10 über den Kragen 11 des Kopfstückes 1 an die Wand 12 heranzieht. Durch Rückdrehen der Schrauben 3 kann das Montageelement wieder in den Ausgangszustand gemäß Fig. 2A zurückgeführt und in diesem aus der Bohrung der Wand 12 und aus der Öffnung des Türbandes 10 entnommen werden.

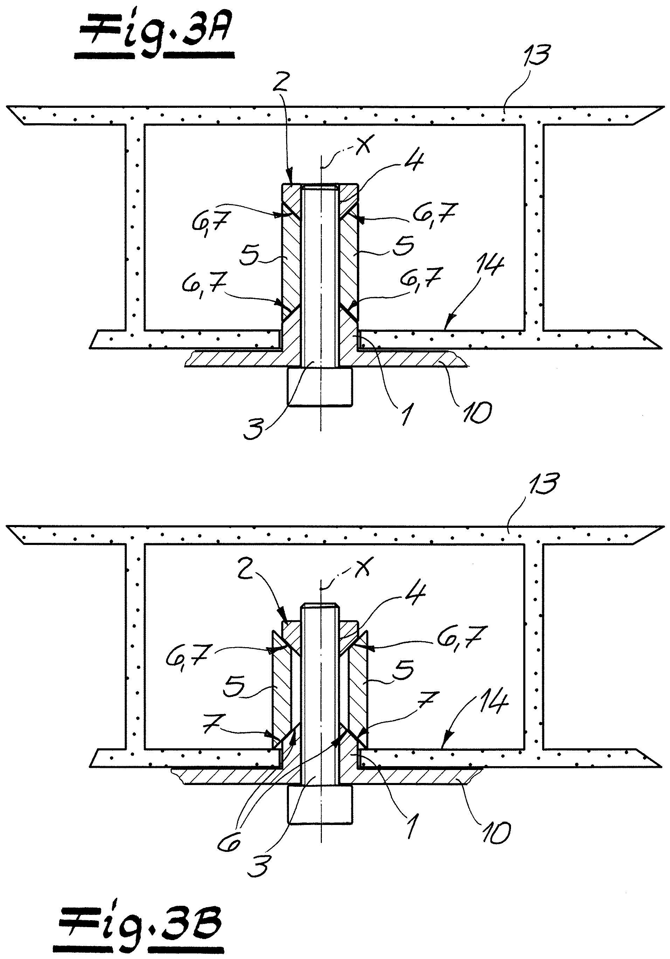

Die Fig. 3A und 3B zeigen ein alternatives Anwendungsbeispiel. Hierbei ist das Türband 10, an den das Kopfstück integral angeformt ist, in ein Hohlprofil 13 eingesetzt. Durch ein Betätigen des Spindeltriebes 3 sind die Zwischenstücke 5 gegen eine Innenfläche 14 des Hohlprofils 13 verspannt. Auch hier lässt sich das Montageelement durch Rückdrehen der Schraube 3 in den Ausgangszustand gemäß Fig. 3A zurückversetzen.

## Patentansprüche

1. Montageelement zur Befestigung von Türbändern (10), insbesondere an Hohlprofilen, mit einem Kopfstück (1), einem Spindeltrieb (3) und einem entlang einer Achse (x) linear gegenüber dem Kopfstück (1) verschiebbaren Fußstück (2), die durch den Spindeltrieb (3) zur Einstellung des Abstandes in Richtung der Achse (x) miteinander verbunden sind, wobei zwischen dem Kopfstück (1) und dem Fußstück (2) zumindest zwei entlang schiefer Ebenen jeweils gegenüber dem Kopfstück (1) und dem Fußstück (2) verschiebbar ausgebildete Zwischenstücke (5) angeordnet sind, wobei durch an dem Kopfstück (1) bzw. an dem Fußstück (2) angeordnete Keilflächen (6) einerseits und an den Zwischenstücken (5) angeordnete zugeordnete Gegenflächen (7) andererseits Schrägführungen gebildet sind und wobei sich die Zwischenstücke (5) jeweils mit dem Kopfstück (1) und dem Fußstück (2) an den schiefen Ebenen hintergreifen, wodurch die Schrägführungen in Zug- und Druckrichtung wirksam sind.

2. Montageelement nach Anspruch 1, **dadurch gekennzeichnet, dass** sich die Zwischenstücke (5) mit dem Kopfstück (1) und dem Fußstück (2) jeweils an den Schrägführungen mittels Vorsprüngen (8) der Zwischenstücke (5) hintergreifen, welche die Keilflächen (6) hintergreifen und mit zugeordneten Nuten (9) am Kopfstück (1) bzw. am Fußstück (2) in Eingriff stehen.

3. Montageelement nach Anspruch 1 oder 2, **dadurch gekennzeichnet, dass** es drei um 120° versetzt angeordnete Zwischenstücke (5) aufweist.

4. Montageelement nach einem der Ansprüche 1 bis 3, **dadurch gekennzeichnet, dass** der Spindeltrieb durch eine Schraube (3) gebildet ist, die mit ihrem Kopf verschiebesicher in oder an dem Kopfstück (1) gelagert ist und mit einem Gewinde in ein Innengewinde (4) an dem Fußstück (2) eingreift.

5. Montageelement nach einem der Ansprüche 1 bis 4, **dadurch gekennzeichnet, dass** das Kopfstück (1) an einem zu befestigenden Objekt, insbesondere einem Türband (10), einstückig angeformt ist.

## Claims

1. A mounting element for attaching door hinges (10), in particular to hollow profiles, comprising a head piece (1), a spindle drive (3), and a base (2), which is linearly displaceable relative to the head piece (1) along an axis (x), which are connected to one another by the spindle drive (3) to set the distance in the direction of the axis (x), wherein at least two intermediate pieces (5), which are each embodied so as to be displaceable relative to the head piece (1) and the base (2) along inclined planes, are arranged between the head piece (1) and the base (2), wherein inclined guides are formed on the one hand by wedge surfaces (6) arranged on the head piece (1) or on the base (2), respectively, and on the other hand by assigned mating surfaces (7) arranged on the intermediate pieces (5), and wherein the intermediate pieces (5) each engage behind one another with the head piece (1) and the base (2) on the inclined planes, wherein the inclined guides are effective in tension and compression direction.

2. The mounting element according to claim 1, **characterized in that** the intermediate pieces (5) with the headpiece (1) and the base (2) each engage behind one another on the inclined guides by means of protrusions (8) of the intermediate pieces (5), which engage behind the wedge surfaces (6) and are engaged with assigned grooves (9) on the head piece (1) or on the base (2), respectively.

3. The mounting element according to claim 1 or 2, **characterized in that** it has three intermediate pieces (5), which are arranged offset by 120°.

4. The mounting element according to one of claims 1 to 3, **characterized in that** the spindle drive is formed by a screw (3), which is supported with its head in or on the head piece (1) so as to be secured against being displaced, and which, with a thread, engages with an internal thread (4) on the base (2).

5. The mounting element according to one of claims 1 to 4, **characterized in that** the head piece (1) is integrally molded on an object to be attached, in particular a door hinge (10).

## Revendications

1. Élément de montage, destiné à fixer des paumelles (10), notamment sur des profilés creux, pourvu d'une pièce de tête (1), d'un mécanisme fileté (3) et d'une pièce de base (2), déplaçable de manière linéaire le long d'un axe (x) par rapport à la pièce de tête (1) qui sont reliées l'une à l'autre par le mécanisme fileté (3), pour le réglage de l'écart dans la direction de l'axe (x), entre la pièce de tête (1) et la pièce de base (2) étant placées au moins deux pièces intermédiaires (5) conçues en étant déplaçables entre des plans obliques, chacune par rapport à la pièce de tête (1) et à la pièce de base (2), par des surfaces cunéiformes (6) placées sur la pièce de tête (1) ou sur la pièce de base (2) d'une part et par des surfaces antagonistes (7) associées, placées sur les pièces intermédiaires (5) d'autre part étant créés des guidages obliques et les pièces intermédiaires (5) respectivement avec la pièce de tête (1) et la pièce de base (2) s'engageant par l'arrière respectivement sur les plans obliques, suite à quoi les guidages obliques sont actifs dans la direction de traction et dans la direction de pression.

2. Élément de montage selon la revendication 1, **caractérisé en ce que** les pièces intermédiaires (5) avec la pièce de tête (1) et la pièce de base (2) s'engagent respectivement par l'arrière sur les guidages obliques au moyen de saillies (8) des pièces intermédiaires (5), lesquelles s'engagent par l'arrière sur les surfaces cunéiformes (6) et par des rainures (9) associées, sont en engagement sur la pièce de tête (1) ou sur la pièce de base (2).

3. Élément de montage selon la revendication 1 ou 2, **caractérisé en ce qu'**il comporte trois pièces intermédiaires (5) placées avec un décalage de 120°.

4. Élément de montage selon l'une quelconque des revendications 1 à 3, **caractérisé en ce que** le mécanisme fileté est formé par une vis (3), qui par sa tête est logée en étant immobilisée dans ou sur la pièce de tête (1) et qui par un filetage, s'engage dans un taraudage (4) sur la pièce de base (2).

5. Élément de montage selon l'une quelconque des revendications 1 à 4, **caractérisé en ce que** la pièce de tête (1) est surmoulée en monobloc sur un objet à fixer, notamment sur une paumelle (10).
